# EUROPEAN PATENT APPLICATION

(11) **EP 4 752 074 A1**
(43) Date of publication of application: **03.06.2026**
(21) Application number: 24215982.0
(22) Date of filing: 28.11.2024
(51) Int. Cl.: B64U 70/92, B64U 80/25, B64U 80/70, B64U 101/31, B64U 101/35, B64U 101/20

(54) **AN OFF-GRID AERIAL DRONE SYSTEM AND METHOD FOR EMPLOYING SUCH SYSTEM FOR VISUAL INSPECTION OF AN AREA OF INTEREST**

(71) Applicant: Drönarstation AB, 566 34 Habo (SE)
(72) Inventor: Olofsson, Jim, 566 34 Habo (SE); Olofsson, Joel, 333 75 Reftele (SE)
(74) Representative: AWA Sweden AB

(57) **Abstract**

An off-grid aerial drone system and a method for visual inspection of an area of interest. The off-grid aerial drone system 10 comprising a lightweight aerial drone 10 comprising an imaging sensor 202. A charging station 100 and a mobile device 300 configured to control the lightweight aerial drone 200. The off-grid aerial drone system 10 is configured to control the flight of the lightweight aerial drone 200, capture by the imaging sensor 202 a plurality of images in the area of interest 20, and transmit to the mobile device 300 the plurality of images captured by the imaging sensor 202. After the plurality of images are captured, the mobile device 300 controls the lightweight aerial drone 200 to return towards the charging station 100. The method relates to operating the off-grid aerial drone system 10 for visually inspecting the area of interest 20.

## Description

### Technical field

The present description relates to an off-grid aerial drone system for visual inspection of an area of interest and a method to implement said off-grid aerial drone system.

### Background

Forests are a crucial part of our ecosystem. They ensure clean air, water, daily resources and they are home to wild animals. In them many tree species vital for our livelihood are situated and forest management is important to inspect their health and productivity in order to take the appropriate measures to circumvent any potential threats. If left untreated, forests can become favorable for insects, catch diseases, and become overpopulated. The most commonly employed methods to perform forest management are forest thinning and pruning to remove a fraction of the trees. This is done with the intention to, for example, promote the health of the forest by removing slowgrowing trees, and improving water uptake. As an added positive effect, thinning of forests aids to attract new wildlife species and ameliorate biodiversity. All these measures require the physical presence of a person or group of people to inspect the forest, determine the parts of the forest that need intervention and then take action. Such a process is in general time consuming as forest owners can own forest terrain that spans tens of hectares and inspecting every tree species is not feasible. Current state of the art methods employs forest management utilizing drones; however drone pilots and video analysis can be expensive and time consuming. Therefore, there is a need for an improved system and method for visual inspection of an area of interest.

### Summary

An objective of the present description is to provide a system and method that at least alleviates the above-mentioned problems.

The inventive concept is based on the inventor's realization that providing a drone system with off grid capability for evaluating an area of interest that does not require a drone pilot nor manual video analysis is of great advantage. The system for evaluating the area of interest may allow remote accessibility to the gathered data. The inventors have further realized that such system may be of advantage for many different areas of interest, not only forest. It may be of advantage within construction, farming or any other land inventory application.

According to a first aspect, an off-grid aerial drone system for visual inspection of an area of interest is provided. The off-grid aerial drone system comprises: a lightweight aerial drone comprising an imaging sensor; a charging station comprising a battery configured to charge the lightweight aerial drone; a mobile device configured to control the lightweight aerial drone; wherein the off-grid aerial drone system is configured to control the flight of the lightweight aerial drone, capture by the imaging sensor a plurality of images in the area of interest, and transmit to the mobile device the plurality of images captured by the imaging sensor; and wherein after the plurality of images are captured, the mobile device controls the lightweight aerial drone to return towards the charging station.

By providing an off-grid aerial drone system for visual inspection of an area of interest as defined above, a user may significantly improve the efficiency for identifying changes in the area of interest. The off-grid aerial drone system allows the user to get an overview of the area without any manual labor and at any remote area of interest.

Within the context of this disclosure, the wording "aerial drone" should be understood as an unmanned aerial vehicle. In particular, the lightweight aerial drone may be a quadcopter drone.

Within the context of this disclosure, the wording "lightweight" should be understood as a weight which does not require the user to have a special purpose drone driving license. E.g. the weight may be 1 kg or less. Preferably the lightweight aerial drone may weigh 500 g or less. Most preferably, the lightweight aerial drone may weigh below 250 g.

Within the context of this disclosure, the wording "off-grid" should be understood as a self-sustaining aerial drone system wherein the charging station is not required to be connected to an electrical outlet to draw power from in order to function.

The imaging sensor on the drone may form part of a camera system. The camera system may further comprise optical elements, such as a lens or system of lenses. The lens or system of lenses may gather the light and focus the light to the imaging sensor.

The imaging sensor may be a coupled charge device (CCD) or a complementary metal-oxide-semiconductor (CMOS) sensor. The imaging sensor may be configured to interpret visible light, resulting in an output of an optical image. The imaging sensor may be configured to interpret infrared light, resulting in a heat map image.

The plurality of images captured may provide an overview of e.g. a forest area, a construction site or an area of lots or buildings.

The plurality of images captured may show a sector that is densely populated with trees. The plurality of images captured may show the sector that is sparsely populated with trees.

The plurality of images captured may provide an overview of an excavation and/or construction area.

The lightweight aerial drone may further comprise a magnet. The magnet may be used for charging the lightweight aerial drone wirelessly via inductive coupling.

The lightweight aerial drone may comprise a socket to insert a plug for charging the lightweight aerial drone.

The charging station may have a replaceable battery. The charging station may have a rechargeable battery. The battery may be configured to charge the lightweight aerial drone. The battery may be configured to charge the mobile device.

The charging station may be configured to be located within the perimeter of the area of interest.

The charging station may configured to be situated in a remote location, e.g. within a forest. The charging station may be ventilated, but with screens for avoiding bugs to enter the charging station.

The charging station may contain a platform for the lightweight aerial drone to be placed onto and facilitate the take-off and/or landing of the lightweight aerial drone.

The charging station may comprise a wireless charger interface for charging the lightweight aerial drone wirelessly. In some embodiments the wireless charger may comprise a magnet to charge the lightweight aerial drone wirelessly via inductive coupling. The magnet may draw power from the battery.

The charging station may comprise a wired charger interface for charging the lightweight aerial drone with a wire. In some embodiments the wired charger may comprise a socket to insert a plug. The plug may connect to the lightweight aerial drone for charging the lightweight aerial drone. The socket may draw power from the battery.

The mobile device may be a mobile phone or tablet configured to communicate with the lightweight aerial drone. The mobile device may have a display. The display may be a touch sensitive display. The mobile device controls the lightweight aerial drone. The mobile device may enable a user to automate the operation of the lightweight aerial drone. The automated operation may be initiated at a distance. Thus, the mobile device facilitates the operation so that the user does not need to be present for navigating the lightweight aerial drone. In some embodiments the mobile device may circumvent the necessity for the user to be present at the off-grid aerial drone station to turn on and navigate the lightweight aerial drone.

The automation process of the operation of the lightweight aerial drone may include automating the departure, flying path and return towards the charging station of the lightweight aerial drone. In particular, the user may create and register default settings wherein information such as the departure time, the area to be inspected, the flying time, the flying path and/or the image capturing frequency may be provided. Hence, the user may inspect the area of interest as frequently as they would like without needing to carry out long manual labor.

By means of the present inventive concept an improved system to the visual inspection of an area of interest is provided. The intended area of interest can be various. In the context of this invention, an area of interest may be, e.g. a forest, construction sites, excavation sites, or a dock or shoreline. In particular, the total area to be inspected may be left to the user to be defined.

According to one embodiment, the charging station may further comprise a solar cell configured to charge the off-grid aerial drone system.

The battery of the charging station may be depleted over time, as the battery continuously recharges the lightweight aerial drone after each flight. When the charging station comprises a solar cell, the solar cell can be used for recharging the battery of the charging station so that it does not get depleted.

According to one embodiment, the solar cell may be arranged as a roof for the charging station, in order to function as a starting platform and/or landing platform for the lightweight aerial drone.

Utilizing a solar cell as a roof reduces both the weight of the charging station and the cost of the charging station since it eliminates the need of initially building a roof of the charging station and subsequently mount a solar cell on top of the roof. The solar cell may form part of the building structure to provide mechanical stability to the walls of the drone system.

According to one embodiment, the charging station may be at least partly made of a flame retardant material to contain any fire inside the drone station.

The charging station is equipped with a battery. In rare occasions, batteries may initiate a fire. By making the charging station of a flame retardant material any such fire may be contained inside the charging station instead of being spread in the area to be inspected. One of the user cases of the off-grid aerial drone system is to visually inspect forests, where there is significant importance to reduce risk of a fire being spread. Other uses, such as constructions sites, excavation sites, docks, are also important to protect from fires. By being configured to be at least partly made of a flame retardant material, damages may be avoided.

The flame retardant material may be partly composed of a flame retardant plastic material. The charging station may be built using a 3D printer. Using a 3D printer may facilitate the production process and lower cost. The 3D printer may print several parts of the charging station in a flame retardant plastic. In one embodiment, the parts are printed from a compound based on Glycol modified Polyethylene Terephthalate Glycol (PET-G) plastic. PET-G, a flame retardant material of UL94 V-0 class, contains the fire from spreading. The PET-G may be a recycled PET-G.

According to one embodiment, the off-grid aerial drone system may be configured to identify at least one object of interest in the plurality of images. The user may define an adequate object of interest to be identified in the plurality of images. The object of interest may be varying with the application in which the system is used. One user case is inspection of a forest. The inspection of the forest may be performed with the intent to identify dying trees, fallen trees, piles or pits, stacks of harvested material such as trees or other changes in the forest. Generally, forests may span large areas. The forest may be of an area 10 hectares or larger.

Covering large areas and manually inspecting trees in a forest may be cumbersome and time consuming. Thus, the time needed to carry out the inspection may be reduced compared to a manual inspection wherein the user has to walk or drive in the forest.

After the capturing process is finalized, the plurality of images may be inspected, and the objects of interest may be identified, such as a fallen tree, a tree that has changed color which is likely due to an insect infestation, or a newly planted tree.

The off-grid aerial drone system may be configured to identify single trees of interest in the plurality of images captured of the forest. From the identified trees, the health of the trees may be identified. As such, a dying tree may be identified. By being configured to identify a dying tree, the information may be displayed to the user on the mobile device, and facilitate the removal of the dying tree.

The off-grid aerial drone system may further be configured to identify a dying tree during time flight while the lightweight aerial drone is flying.

The mobile device may have a processing unit in its circuitry dedicated to analyzing images. The processing unit may have been trained by a machine learning algorithm to identify dying trees. The machine learning algorithm may have been fed images of diverse dying trees to recognize signs of disease and deterioration in the trees. The dying trees may be recognized by the shape of their canopy and/or foliage. The dying trees may further be recognized by the color of their foliage. A cue to indicate a dying tree may be the tree having a change of color compared to a photo during an earlier flight. The off-grid aerial drone system may further be configured to identify a pile of material, such as a pile of wood in the plurality of images captured.

From the plurality of images captured, a pile of wood is identified. The pile of wood may be identified based on the shape and size of the wooden logs that form the pile of wood.

The processing unit may have been trained by a machine learning algorithm to identify a pile of wood chips on the ground in a heating plant for example. By being configured to identify a pile of wood, the information may be displayed to the user on the mobile device and determine how much wood chip is left to maintain a heating plant before a replenishment may be needed.

The aerial drone system may further be configured to identify objects of interest in an excavation site such as a pit in the ground, a pile of material, and/or a machine. The processing unit may have been trained to identify the pit on ground. By being configured to identify pits on the ground, an excavation company may obtain the information about its location and size and fill the pit.

The processing unit may have been trained to identify the pile of material. By being configured to identify piles of material, an excavation company may obtain the information about its location and size and remove the pile.

The processing unit may have been trained to identify the machines on ground. By being configured to identify machines on the ground, an excavation company may keep track of how many machines are currently working on the site and/or plan when more or less machines are needed.

The aerial drone system may further be configured to identify objects of interest in a construction site such as a pit and/or pile on the ground, a roof, a beam, and/or a machine.

Similar as in the user case above, the processing unit may have been trained to identify the objects of interest in a construction site. This may be advantages to determine a status of a constructions site, e.g. how many buildings that have complete roofs, or incomplete roofs. It may also be used for identifying needs of repairs of roofs or to quantify the number of beams, roofing material or other material that is need to complete a construction site. The aerial drone system may further be configured to identify objects of interest in a dock such as a boat and/or a pier.

According to one embodiment, the at least one object of interest is selected from the list consisting of: a dying tree, a dead tree, a fallen tree, a newly planted tree, a pit in the ground, a pile of material, a machine, a vehicle, a roof, a beam, a boat, a pier.

Hereby, the value and time savings of the inventory of the area of interest may be vastly increased for the user. For example, by being configured to identify fallen trees, the information may be displayed to the user on the mobile device and facilitate the removal of fallen trees. The user may in other cases make improved quantity calculations for reducing waste in construction site, e.g. quantifying the amount of filling material needed to fill pits, or the construction material to complete a roofing.

The mobile device may have a processing unit in its circuitry dedicated to analyze images. The processing unit may have been trained by a machine learning algorithm to identify standing and fallen trees.

According to one embodiment, each of the plurality of images captured may comprise GPS data. In one embodiment, also the objects of interests may be associated with a GPS point.

By being configured to comprise GPS data, the user may identify the location of an object of interest in even less time, for example a dying tree or a fallen tree. The GPS data may be added to each of the plurality of images captured by communicating with a satellite to provide geolocation.

According to one embodiment, the plurality of images captured may be aggregated into an integrated map with an associated time stamp.

The mobile device may contain an application for displaying the integrated map. The plurality of images captured may be aggregated into the integrated map and be displayed on the mobile device. The integrated map may use GPS data to aggregate the plurality of images into the integrated map. Hereby, the user does not have to study a plurality of images separately, but can have an overview on the integrated map to identify changes and/or objects of interest in the full integrated map view.

According to one embodiment, a first integrated map with a first associated time stamp is compared with a second integrated map with a second associated time stamp, in order to identify changes in the area of interest between the first time stamp and the second time stamp. Hereby, the user may identify changes in the area of interest over time. The changes may be automatically detected and highlighted by the mobile device or other parts of the off-grid aerial drone system. For example, new objects of interests may be highlighted in an integrated map with later time stamp.

The user may be interested in assessing how the at least one object of interest evolves in time, e.g. how a forest has changed. This would allow the user to identify locations that may have developed dying trees. The user may then take appropriate measures to the identified locations.

A first portion of the first integrated map with the first associated time stamp and a second portion of the second integrated map with the second associated time stamp may be then displayed simultaneously on the display of the mobile device within the application.

The integrated map may have a slider that divides the two integrated maps of different time stamps, when it displays two integrated maps. The slider may be configured to change the size of the respective portions of the displayed integrated maps. The user may touch and slide the slider along a predefined direction to assess the time evolution of the at least one object of interest.

The application may further comprise intelligent features to automatically recognize a difference between integrated maps with different associated time stamps. Such a difference may be a structural change of the at least one object of interest or a quantity of the objects of interest.

The integrated map may be stored on the mobile device and the user may select which two integrated map to compare to each other.

By sliding the slider fully to one side the application may display on the full screen the integrated map with the first or second associated time stamp. By being configured to display an overlay of two different integrated maps of the same area of interest, the user may identify changes in the area of interest.

In one embodiment, a plurality of integrated maps with a plurality of time stamps may be stored on the mobile device. Hereby, the user may choose different reference integrated maps to compare the newest integrated map with. This may be interesting to compare changes withing weeks for some objects, and compare changes within years for other type of objects. E.g. in the user case of a forest inventory, it may be interesting for the user to compare the map relative last week, but also relative last year at this time of year.

According to one embodiment, the location of the object of interest may be displayed on the integrated map.

The integrated map may have selection criteria filters to isolate the location of at least one image in the plurality of images. A possible filter may be to display GPS coordinates only if the at least one image in the plurality of images captured has a stamp that identifies it as, e.g. containing a dying tree. By being configured to display the location of the dying tree, the user may directly go to the location of interest.

According to one embodiment, the off-grid aerial drone system may further comprise a hand-held controller configured to interact with the mobile device and communicate with the lightweight aerial drone.

By being configured to comprise a hand-held controller, the communication with the lightweight aerial drone may be facilitated. The hand-held controller may be connected to the mobile device via a wired cord. The hand-held controller may be connected to the mobile device via Wi-Fi or Bluetooth^{®}. The hand-held controller may comprise buttons wherein the buttons may be used for manual control of the drone. The mobile device may communicate with the lightweight aerial drone from the hand-held controller. The hand-held controller may be charged by the battery of the charging station.

According to one embodiment, the mobile device may emulate the control signal to the hand-held controller which can transmit the emulated control signal to the lightweight aerial drone.

By being configured to emulate the control signal from the mobile device to the hand-held controller, the control signals sent from the hand-held controller to the lightweight aerial drone may be kept in the drones original format without a need to adapt a receiver on the drone.

According to one embodiment, the mobile device may be an advanced hand-held controller, and an emulation signal may be generated on the advanced hand-held controller to control the lightweight aerial drone.

The system may comprise an advanced hand-held controller. The advanced hand-held controller may be programmable and/or have an integrated display. The advanced hand-held controller may be used to automate the flight of the drone. The automation process of the operation of the drone may include automating the departure, flying path and return towards the charging station of the drone. In particular, the user may create and register default settings wherein information such as the departure time, the area size to be inspected, the flying time, the flying path and the image capturing frequency may be provided. By being configured to be an advanced hand-held controller that automates the inspection process, the user can inspect the area of interest as frequently as they would like without needing to carry out long manual labor.

According to one embodiment, the size and weight of the off-grid aerial drone system may be adapted to be carried by a single person.

By being configured to be carried out by a single person, it may allow the user to move the off-grid aerial drone system to different locations.

Prior to being placed for operation in the area of interest, the components of the off-grid aerial drone system may be stored within the charging station. As such, prior to being placed in the area of interest, the off-grid aerial drone system and the charging station may have the same size and weight.

The charging station may be understood as a rigid multifaceted body of preferred dimensions less than 70 cm wide, 70 cm long and 70 cm high. Most preferably the charging station may have dimensions less than 50 cm wide, 50 cm long and 50 cm high. The weight of the off-grid aerial drone system may also be such as to allow accessible transferring between locations. A preferred weight may be less than 20 kg. Most preferably the off-grid areal drone system may weigh less than 15 kg.

According to one embodiment, the mobile device may be configured to have an image displaying application for displaying the captured at least one image. By having an image displaying application, the user can access the at least one image captured by the drone to be able to inspect the status of the trees in the forest. The at least one image captured may contain one or several trees simultaneously. In the image display application, the user may be able to zoom-in the at least one image captured to a specific tree.

According to one embodiment, the GPS location of the mobile device may be shown on the integrated map. By being configured to display the GPS location of the mobile device, the user may easily navigate the landmark on foot. Thus, the user may easily reach the destination of a dying tree.

According to a second aspect a method for employing an off-grid aerial drone system for visually inspecting an area of interest is provided. The method comprises: controlling the flight of a lightweight aerial drone; capturing a plurality of images in the area of interest using an imaging sensor on the lightweight aerial drone; transmitting the plurality of images captured from the lightweight aerial drone to a receiving mobile device; controlling the return of the lightweight aerial drone towards the charging station with the mobile device.

This aspect may generally present the same or corresponding advantages as the former aspect.

By this method, an area of interest may be visually inspected with a higher efficiency as explained above in relation the system.

The method may control the flight of the lightweight aerial drone by automating the departure, flying path, and flying time of the lightweight aerial drone.

The capturing of the plurality of images of the area of interest may be performed using an imaging sensor on the lightweight aerial drone. The imaging sensor may comprise a camera system. The camera system may further comprise optical elements, such as a lens or system of lenses. The lenses or system of lenses may gather the light and focus the light to the imaging sensor.

The controlling of the lightweight aerial drone towards the charging station may be such that the aerial drone lands on the charging station. The charging station may contain a platform for the aerial drone to land.

According to one embodiment of the second aspect, the method may be configured for identifying an object of interest in the captured at least one image, as discussed above.

The method may have a processing unit which is dedicated to analyzing images. The processing unit may have been trained by a machine learning algorithm to identify trees. The machine learning algorithm may have been fed images of diverse trees.

Any of the features described in relation to the system, may be implemented in the method. This includes both functional features, like detecting specific objects of interest or analytical step, and structural features, like what type of image sensors or sizes of the drone that is used.

### Brief description of the drawings

The aspects of the present inventive concept, including its particular features and advantages, will be readily understood from the following detailed description and the accompanying drawings, in which:
Figure 1 is an overview illustration of the complete off-grid aerial drone station according to one embodiment.
Figure 2 illustrates a back view of the charging station according to one embodiment.
Figure 3 illustrates a frontal inside view of the charging station according to one embodiment.
Figure 4 illustrates the action of capturing the plurality of images of the area of interest to aggregate the integrated map.
Figure 5a illustrates a first integrated map with a first time stamp.
Figure 5b illustrates a second integrated map with a second time stamp.
Figure 5c illustrates the operation of the application to visualize the evolution of the area of interest.
Figure 6 illustrates the schematic of the method steps for employing an off-grid aerial drone system for visually inspecting an area of interest.

### Detailed description

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description.

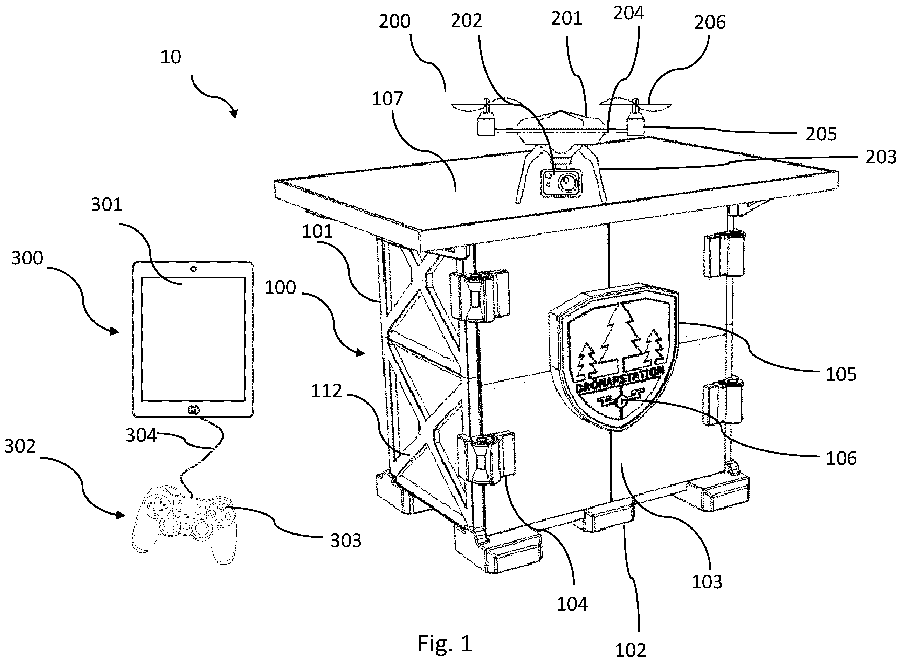

An off-grid aerial drone system 10 will be described in the following with reference to Fig. 1 - 6.

For clarity reasons, whenever a component comprises a plurality of parts, only one of them will be denoted with a reference number.

Figure 1 is an overview illustration of the complete off-grid aerial drone system 10 according to one embodiment. The off-grid aerial drone system 10 is an easily carriable system, that can be placed remotely without a power grid access and be operated with self-sustainable energy in the area of interest.

The off-grid aerial drone system 10 comprises a charging station 100, a lightweight aerial drone 200, and a mobile device 300.

The off-grid aerial drone system 100 is configured for the visual inspection of an area of interest 20. Although most examples given herein are in relation to a user case in the forest, the area of interest 20 in the scope of this invention is not limited to a forest application. In the context of this invention, the area of interest 20 may be, e.g. a forest, construction sites, excavation sites, a shoreline or a dock, as discussed above. The off-grid aerial drone system 10 may be configured to be located within the perimeter of the area of interest 20.

The charging station 100 embodiment shown in Figure 1 is a cuboid. It will be apparent to the person skilled in the art that this embodiment is one of many possible embodiments to construct the charging station.

All plastic components of the charging station 100 described below may be manufactured by 3D printing. This includes also components likes screws and hinges. The material used to manufacture the plurality of rectangular wall elements 101 may be a plastic material, in the illustrated example a recycled compound based on Glycol modified Polyethylene Terephthalate Glycol (PET-G) flame retardant UL94 V-0 class was used.

The charging station 100 comprises a plurality of rectangular wall elements 101. The rectangular wall elements 101 may be manufactured with an X-shaped forming beam 112 that crosses at the center of a rectangular wall element 101 and extends to the edges of the rectangular wall element 101.

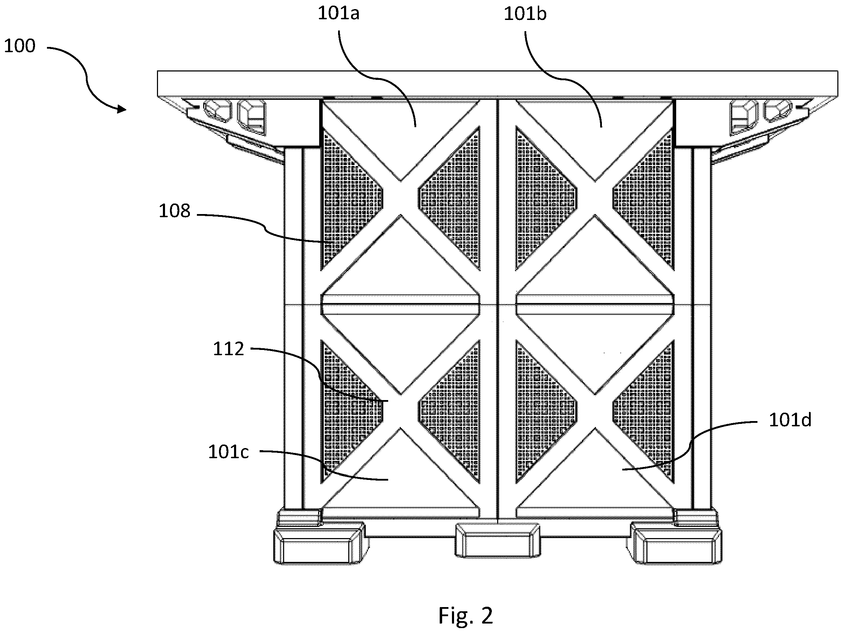

The X-shaped forming beam 112 may improve the stability of the rectangular wall element 101 as it may distribute the force more evenly inside the rectangular wall element 101. The X-shaped forming beam 112 may reduce the weight of the rectangular wall element 101 as less material may be needed to build a stable and durable rectangular wall element 101. The rectangular wall elements 101 may be configured to engage with an adjacent rectangular wall element to lock the rectangular wall elements 101 together along the sides facing each other of the rectangular wall elements 101 and thereby form the walls of the charging station 100. As best seen in fig. 2, this may e.g. be achieved by connecting the first wall element 101a to a second wall element 101b places to the right side of the first wall element, and being connected along the adjacent vertical sides. Further, the first wall element 101a is connected to a third wall element 101c placed below of the first wall element along the adjacent horizontal sides of the first and third wall elements 101a, 101c.

The charging station 100 comprises a plurality of legs 102 attached to the bottom and/or side portion of the charging station 100. The legs 102 may facilitate the placement of the charging station in different terrains. The legs may be extendable or adjustable to provide a stable set up in an uneven terrain.

The front side of the charging station 100 comprises two doors, wherein each door is connected to the frame of the charging station 100 by hinges 104. The hinges allow for opening the doors in an outwards manner. The hinges may be fastened with bolts or screws.

In the illustrated example, a protruding rigid body 105 is arranged marked with the company logo and name, which functions as a locking device for locking the doors in closed position.

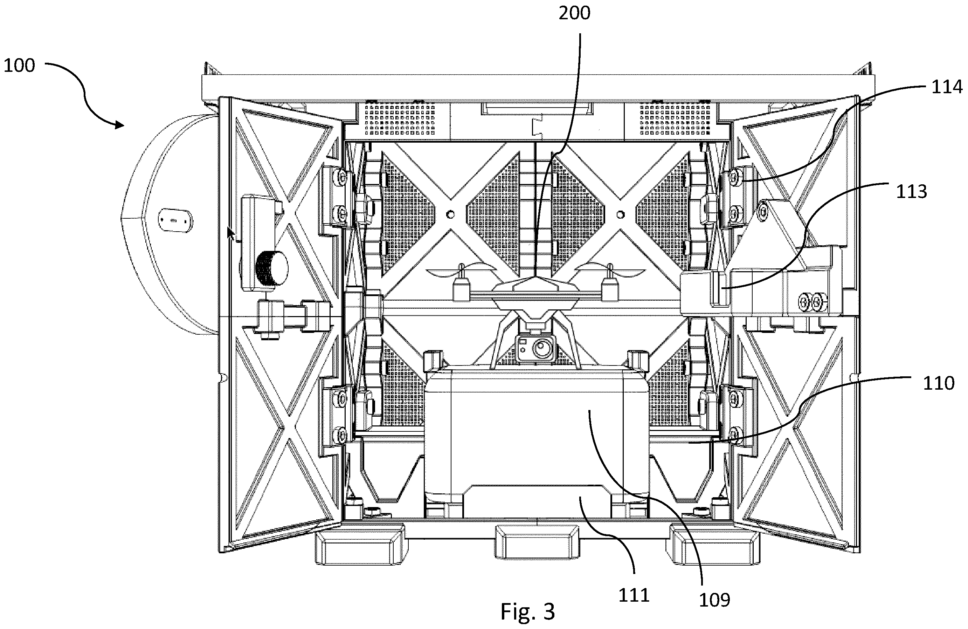

As may be observed in the latter Figure 3 which illustrates the charging station 100 in an open configuration, the protruding rigid body 105 is fixed to one of the doors. The protrusion 105 comprises a keyhole 106. The keyhole 106 may be coupled to a locking and/or unlocking mechanism. The keyhole 106 when in an unlocked position may enable opening the doors 103 and access the inside of the charging station 100.

The top side 107 of the charging station may act as a roof. The top side 107 of the charging station 100 may be a solar cell as is the case in the illustrated example. In such an embodiment the solar cell on the top side 107 of the charging station 100 may be configured to function as a starting platform and/or landing platform for the lightweight aerial drone 200.

Utilizing a solar cell as a roof reduces the cost of the charging station thanks to the dual use of the solar panel.

The lightweight aerial drone 200 may be a quadcopter drone. The lightweight aerial drone comprises a frame 201. The frame may be attached to four arms 204. The frontal view of the lightweight aerial drone 200 shown in Figure 1 depicts only two of the four arms attached to the main frame.

Further, the lightweight aerial drone comprises at least two legs 203 wherein the legs may be used to facilitate the landing of the lightweight aerial drone. Each of the arms 204 comprises a motor 205 distally attached with respect to the frame 201. The propelling blades 206 are attached at the top of the motors 205 to enable the flight of the lightweight aerial drone skywards. Embedded within the frame, the lightweight aerial drone further comprises a battery (not illustrated) in order to be operational.

The lightweight aerial drone 200 has attached to the frame 201 an imaging sensor 202. The imaging sensor 202 on the lightweight aerial drone 200 may form part of a camera system. The camera system may further comprise optical elements, such as a lens or system of lenses. The lens or system of lenses may gather the light and focus the light to the imaging sensor 202. The system of lenses may be configured to change the magnification and capture higher magnification images.

The operation of the lightweight aerial drone 200 may be fully controlled and automated by a mobile device 300. The mobile device 300 may have a display 301. The display 301 may allow the user to navigate between different applications installed on the operating system of the mobile device 300. From the mobile device 300 the user may set parameters to automate the flight of the lightweight aerial drone 200. The display 301 may be a touch sensitive display.

The off-grid aerial drone system 10 may further comprise a hand-held controller 302 configured to interact with the mobile device 300 and communicate with the lightweight aerial drone 200.

The hand-held controller 302 may be connected to the mobile device via a physical cord 304. The hand-held controller may be connected to the mobile device via Wi-Fi or Bluetooth^{®}. The possibility to communicate with a cordless connection facilitates the operation of the lightweight aerial drone 200 wherein a user may control the lightweight aerial drone 200 with the aid of the hand-held controller 302 at a distance.

The hand-held controller may comprise a plurality of buttons 303. The plurality of buttons 303 may be configured to have different functionalities related to a manual control of the drone. The plurality of buttons 303 may be pressed in order to allow manually operating the lightweight aerial drone 200 and/or the mobile device 300 through the hand-held controller.

Figure 2 illustrates a back view of the charging station 100 according to one embodiment. The back side comprises at least four rectangular wall elements 101a-101d locked together, as discussed above. In comparison to the rectangular wall elements 101 located on the right and/or left side of the charging station 100, the rectangular wall elements 101 of the back side is illustrated to further comprise ventilated portions 108. The X-forming beam 112 shape is the same as the other wall elements and divides the rectangular wall element 101 into four triangular components. Two of the triangular components may constitute the ventilated potions. Also these portions may be 3D printed. The openings in the ventilated portion 108 may serve to provide ventilation to the charging station 100. However, in some areas of interest, e.g. the charging station 100 may be situated in a forest, the charging station 100 may be exposed to an environment where e.g. bugs want to enter inside the charging station. This may be mitigated by building the mesh in an appropriate size, e.g. holes that are less than 5mm, less than 3mm or less than 1 mm each. This will both allow ventilation and prohibit insects from entering the charging station.

Figure 3 illustrates a frontal inside view of the charging station 100 according to one embodiment. In this frontal inside view the doors 103 are in an open configuration. The battery 109 of the charging station 100 may be positioned on top of the bottom side portion of the charging station 100. The battery may be locked in position by at least 2 side elements 100 spaced at a distance apart as to provide sufficient room for the battery 109 to be accommodated.

There may be a protruding element 111 configured to hold the battery in position on the front side of the battery. This may be of advantage when e.g. moving the charging station. The inner side of the door 103 may comprise a holding element 113 configured to store the mobile device 300 and/or the optional hand-held controller 302 during the periods when the off-grid aerial drone system 10 is not in operation.

The top side of the battery 109 may serve as a rack to store the lightweight aerial drone 200.

The hinges 104 are fastened on the doors 103 and the rectangular wall elements 101 by bolts 114.

The user may store inside the charging station 100 the lightweight aerial drone 102. The user may further store the mobile device 110.

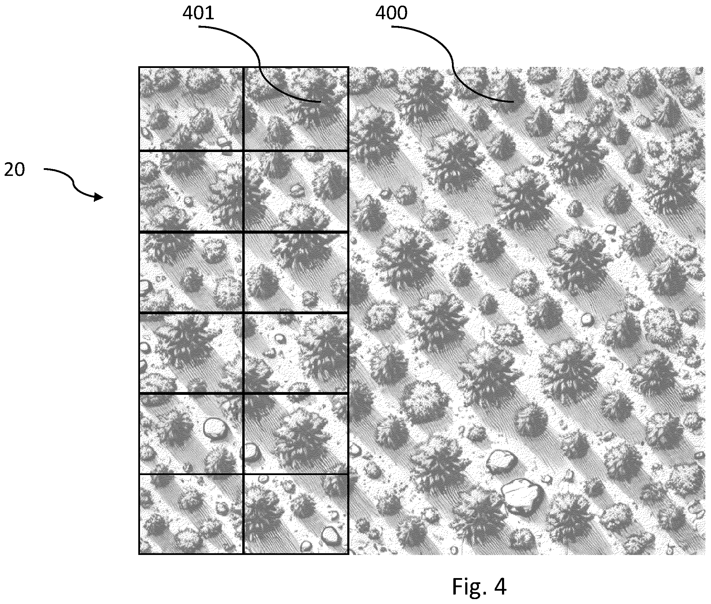

Figure 4 illustrates the action of capturing a plurality of images of the area of interest 20 to aggregate an integrated map. The mobile device 300 may provide the aerial drone 200 with the information of the size and/or location of the area of interest 20 that will be investigated.

The information pertaining to the area of interest 20 may be transmitted to the lightweight aerial drone 200 in the form of an orthographic map 400. This may be conducted during the flight, to avoid manual handling of e.g. memory cards on the drone.

The orthographic map 400 may be subsequently populated with images 401 to span the entirety of objects located within the area of interest 20.

The flying path (not illustrated) that the lightweight aerial drone 200 may fly may be based on the instruction received by the mobile device 300. The flying path may be a continuous spiral without any discontinuity along the spiral. The flying path may also be a spiral wherein the path is formed by discontinuous steps wherein the lightweight aerial drone 200 takes a sharp 90 degrees turn to progress into the subsequent segment of the spiral.

Furthermore, the flying path may be in the form of a zig-zag pattern. The preferred flying path would be a continuous spiral. Such a flying path provides the fastest mapping of the area of interest 20 while consuming the least amount of resources, such as the battery charge of the lightweight aerial drone 200.

Throughout the flying path a plurality of images 401 may be captured. The frequency of images may be such that no discontinuity is formed between two consecutive images 401 when mapping the area of interest 20 as illustrated in Figure 4. It may occur that two consecutive images have overlapping portions. The overlapping portions may be merged together during the post-processing of the images within the mobile device 300 to form a continuous image. The plurality of images 401 captured may be to such extent as to cover the full area of interest 20.

In one embodiment the number of plurality of images is more than 10 per minute, or more than 10 per second. In such embodiment there will be a substantial amount of overlap, which may facilitate the operation to aggregate the images to a single integrated map. In one embodiment, the plurality of images is captured from a video stream.

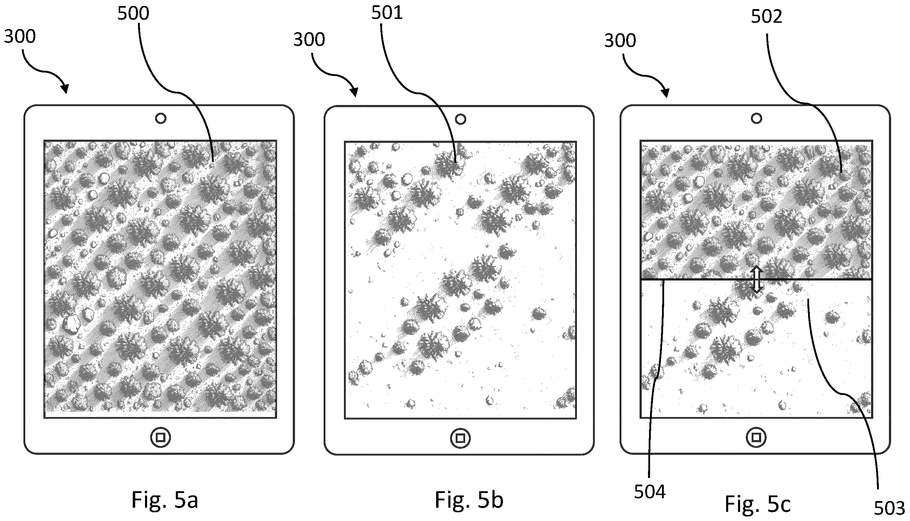

Figure 5a illustrates a first integrated map 500 with a first time stamp. The first integrated map 500 is displayed within an application in the mobile device 300. The user may interact with the first integrated map 500 such as to zoom-in to at least one object of interest, or zoom-out to get a full overview of the integrated map.

Figure 5b illustrates a second integrated map with a second time stamp. The second integrated map 501 is displayed within the application in the mobile device 300. The user may interact with the second integrated map 501 such as to zoom-in to at least one object of interest, or zoom-out to get a full overview of the integrated map.

Figure 5c illustrates the operation of the application to visualize the evolution of the area of interest 20.

A first portion 502 of the first integrated map with the first associated time stamp and a second portion 503 of the second integrated map with the second associated time stamp may be displayed simultaneously on the display 301 of the mobile device 300 within the application.

The application may be configured to have a slider 504 that divides the two integrated maps of different time stamps, when it displays two integrated maps. The slider 504 may be configured to change the size of the respective portions of the displayed integrated maps. The user may touch and slide the slider 504 along a predefined direction to assess the time evolution of the at least one object of interest. This may allow an easy comparison of the area of interest and changes that has occurred between the dates of the image captures.

By sliding the slider 504 fully to one side the application may display on the full screen the integrated map with the first or second associated time stamp.

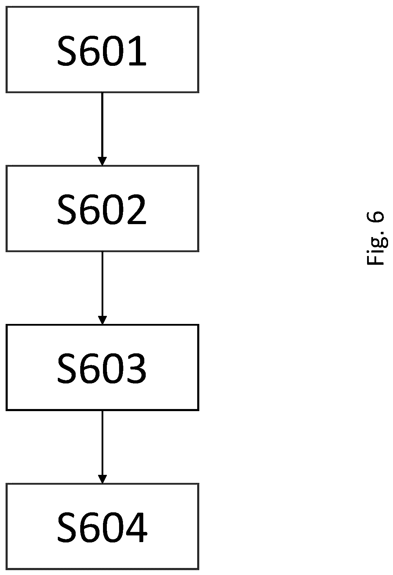

Figure 6 illustrates the schematic of the method steps for employing an off-grid lightweight aerial drone system 10 for visually inspecting an area of interest 20. The method comprises the steps of controlling S601 the flight of a lightweight aerial drone 200, capturing S602 a plurality of images in the area of interest 20 using an imaging sensor 202 on the lightweight aerial drone 200, transmitting S603 the plurality of images captured from the lightweight aerial drone 200 to a receiving mobile device 300, controlling S604 the return of the lightweight aerial drone 200 towards the charging station 100 with the mobile device 300.

The method steps relate to the system as described above, and any detail described in relation to the system should be understood as also being optionally applicable to the method. E.g. the method of controlling the lightweight aerial drone 200 may be done in a flight pattern as described in relation to the system. Also, the step of capturing S602 a plurality of images may be done with anyone of the imaging sensors 202 and described, and with any frequency as described in relation to the system. Likewise, the step of transmitting S603 the plurality of images captured from the lightweight aerial drone 200 may be conducted in real-time as described above in relation to the system.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. An off-grid aerial drone system (10) for visual inspection of an area of interest (20), the drone system comprising:
a lightweight aerial drone (100) comprising an imaging sensor (202);
a charging station (200) comprising a battery (109) configured to charge the lightweight aerial drone (200);
a mobile device (300) configured to control the lightweight aerial drone (200);
wherein the off-grid aerial drone system (10) is configured to control the flight of the lightweight aerial drone (200), capture by the imaging sensor (202) a plurality of images in the area of interest (20), and transmit to the mobile device (300) the plurality of images captured by the imaging sensor (202); and wherein after the plurality of images are captured, the mobile device (300) controls the lightweight aerial drone (200) to return towards the charging station (100).

2. The off-grid aerial drone system (10) according to claim 1 wherein the charging station (100) further comprises a solar cell (107) configured to charge the off-grid aerial drone system (10).

3. The off-grid aerial drone system (10) according to claim 2 wherein the solar cell (107) is arranged as a roof for the charging station (100), in order to function as a starting platform and/or landing platform for the lightweight aerial drone (200).

4. The off-grid aerial drone system (10) according to any of the previous claims wherein the charging station (100) is at least partly made of a flame retardant material to contain any fire inside the charging station (10).

5. The off-grid aerial drone system (10) according to any of the previous claims wherein the off-grid aerial drone system (10) is configured to identify at least one object of interest in the plurality of images.

6. The off-grid aerial drone system (10) according to claim 5 wherein the at least one object of interest is selected from the list consisting of:
- a dying tree,
- a dead tree,
- a fallen tree,
- a newly planted tree,
- a pit in the ground,
- a pile of material,
- a machine,
- a vehicle,
- a roof,
- a beam,
- a boat, and
- a pier.

7. The off-grid aerial drone system (10) according to any of the previous claims wherein each of the plurality of images captured comprises GPS data.

8. The off-grid aerial drone system (10) according to any of the previous claims wherein the plurality of images captured are aggregated into an integrated map (500) with an associated time stamp.

9. The off-grid aerial drone system (10) according to claim 8 wherein a first integrated map with a first associated time stamp (500) is compared with a second integrated map with a second associated time stamp (501), in order to identify changes in the area of interest (20) between the first time stamp and the second time stamp.

10. The off-grid aerial drone system (10) according to claim 8 or 9 wherein the location of the object of interest is displayed on the integrated map.

11. The off-grid aerial drone system (10) according to any of the previous claims, further comprising a hand-held controller (302) configured to interact with the mobile device (300) and communicate with the lightweight aerial drone (200).

12. The off-grid aerial drone system (10) according to claim 11, wherein the hand-held controller (302) emulates the control signal from the mobile device (300) and transmit the emulated control signal to the lightweight aerial drone (200).

13. The off-grid aerial drone system (10) according to claim 11 or 12 wherein the mobile device (300) is an advanced hand-held controller, and an emulation control signal is generated on the advanced hand-held controller to control the lightweight aerial drone (200).

14. The off-grid aerial drone system (10) according to any of the previous claims wherein the size and weight of the off-grid aerial drone system (10) is adapted to be carried by a single person.

15. A method (S600) for employing an off-grid aerial drone system (10) for visually inspecting an area of interest (20), the method comprising:
controlling (S601) the flight of a lightweight aerial drone (200);
capturing (S602) a plurality of images in the area of interest (20) using an imaging sensor (202) on the lightweight aerial drone (200);
transmitting (S603) the plurality of images captured from the lightweight aerial drone (200) to a receiving mobile device (300);
controlling (S604) the return of the lightweight aerial drone (200) towards a charging station (100) with the mobile device (300).
